Europäisches Patentamt

European Patent Office

Office européen des brevets

(19)

(11) Veröffentlichungsnummer: **0 239 754**
**B1**

(12) # EUROPÄISCHE PATENTSCHRIFT

(45) Veröffentlichungstag der Patentschrift:
01.08.90

(51) Int. Cl.⁵: **B60T 13/14**

(21) Anmeldenummer: **87101848.7**

(22) Anmeldetag: **10.02.87**

(54) **Bremsdruckgeber für eine hydraulische Kraftfahrzeugbremsanlage.**

(30) Priorität: **19.03.86 DE 3609279**
**19.03.86 DE 3609280**

(43) Veröffentlichungstag der Anmeldung:
**07.10.87 Patentblatt 87/41**

(45) Bekanntmachung des Hinweises auf die Patenterteilung:
**01.08.90 Patentblatt 90/31**

(84) Benannte Vertragsstaaten:
**DE FR GB IT SE**

(56) Entgegenhaltungen:
**DE-A- 3 108 908**
**FR-A- 2 391 099**
**GB-A- 2 097 499**

(73) Patentinhaber: **ALFRED TEVES GmbH,**
**Guerickestrasse 7 Postfach 90 01 20, D-6000 Frankfurt am Main 90(DE)**

(72) Erfinder: **Seibert, Wolfram Dr,**
**Christian-Götz-Strasse 13, D-6102 Pfungstadt(DE)**
Erfinder: **Ocvirk, Norbert, Hermannstrasse 27,**
**D-6050 Offenbach(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Bremsdruckgeber für eine hydraulische Kraftfahrzeugbremsanlage gemäß dem Oberbegriff des Anspruchs 1.

Bei einem aus der DE-OS 31 08 908 bekannten derartigen Bremsdruckgeber ist zur Betätigung der Ventilvorrichtung ein Scherenhebel vorgesehen, der eine Relativbewegung zwischen dem Verstärkerkolben und der Betätigungsvorrichtung auf die Ventilvorrichtung überträgt. Die Ventilvorrichtung ist dabei als Steuerschieber ausgebildet, der parallel zum Verstärkerkolben im Gehäuse des Bremsdruckgebers gelagert ist und je nach Betätigungsstellung die Verstärkerkammer mit einer Hilfsdruckquelle oder mit einem drucklosen Behälter verbindet. Diese Ausbildung der Ventilsteuerung ist aufwendig und teuer in der Herstellung, da sie besondere Anforderungen an die Herstellungsgenauigkeit des Ventilschiebers und der Hebelübertragung stellt.

Des weiteren offenbart die GB 2 097 499 einen Bremsdruckgeber, der mit einer Ventilvorrichtung versehen ist, die aus einem pedalstangenseitig betätigbaren, sowie im Verstärkerkolben geführten, ersten Schieberventil besteht und mit einem zweiten, baulich aus einem Stempel und hülsenförmig gestalteten Steuerschieber, vereinigt zu einem senkrecht zur Pedalbetätigungsvorrichtung wirkendes Schieberventil die Steuerung vom Druckmittel zwischen dem Druckspe, dem Verstärkerraum und dem drucklosen Behälter ermöglicht. Dieser Aufbau des Bremsdruckgebers hat den Nachteil, daß die Druckableitung von der Verstärkerkammer zum drucklosen Behälter nur mittelbar über eine Vielzahl aufwendiger konstruktiver Detaillösungen sichergestellt ist, da eine direkte Rückflußverbindung von der Verstärkerkammer zum Behälter ohne die Zwischenschaltung mehrerer Funktionsmittel nicht möglich ist.

Der Erfindung liegt die Aufgabe zugrunde, einen Bremsdruckgeber der eingangs genannten Art zu schaffen, der einfacher und billiger herzustellen ist, der sich durch eine niedrige Ansprechkraft auszeichnet und dessen Ansprechverhalten beim Lösen besonders gut ist.

Die Aufgabe wird erfindungsgemäß durch die die Patentansprüche 1 und 7 kennzeichnenden Merkmale gelöst. Eine solche hydraulische Übertragung der Betätigungsbewegung auf die Ventilvorrichtung ermöglicht einen einfachen Aufbau des Bremsdruckgebers und der Ventilvorrichtung und verringert aufgrund der sich in ihrer Länge selbst einstellenden Druckmittelsäule die Anforderungen an die Herstellgenauigkeit.

Eine besonders einfache Ausgestaltung des Bremsdruckgebers läßt sich erfindungsgemäß dadurch erzielen, daß die Ventilvorrichtung ein im Verstärkerkolben eingefügtes, erstes Ventilelement aufweist, so daß über einen im Geberzylinder angeordneten Kanal der Verstärkerraum unmittelbar mit dem drucklosen Behälter hydraulisch verbindbar ist, wobei eine präzise Druckmittelsteuerung zum Vorratsbehälter durch ein in den Zylinderraum des Verstärkerkolbens öffnendes Rückschlagventil realisiert ist.

Durch die erfindungsgemäße Eingliederung des zweiten Ventilelementes in die Kolben-Zylinder-Anordnung an der Betätigungsvorrichtung wird eine kurze axiale Baulänge und ein geringer Bauaufwand erzielt. Dabei können Geber- und Nehmerzylinder erfindungsgemäß so angeordnet sein, daß ihre Kolben auf ihren den Zylinderräumen abgekehrten Seiten mit dem Hilfsdruck beaufschlagbar sind. Dies ermöglicht einen einfachen Aufbau der Ventilvorrichtung, da eine Trennung zwischen den Ventilkammern und dem Nehmerzylinder entbehrlich ist.

Vorzugsweise ist der Zylinderraum des Geberzylinders über ein in der Grundstellung offenes und beim Betätigen durch die Betätigungsvorrichtung schließbares Ventil an einen drucklosen Behälter anschließbar. Hierdurch wird in der Bremslösestellung ein vollständiger Druckabbau in den Räumen der Kolben-Zylinder-Anordnung gewährleistet und eine Funktionsstörung durch eine eventuelle Leckage an der Ventilvorrichtung vermieden.

Weiterhin kann erfindungsgemäß vorgesehen sein, daß die Verstärkerkammer mit dem Zylinderraum des Geberzylinders über ein in den Zylinderraum öffnendes Rückschlagventil verbunden ist. Dies hat den Vorteil, daß die Verstärkerkammer über den Zylinderraum des Geberzylinders entleert werden kann, wenn das Ventil des Geberzylinders geöffnet wird. Das Ventil des Geberzylinders bildet somit gleichzeitig das zweite mechanisch betätigbare Ventilelement der erfindungsgemäßen Ventilvorrichtung. Vorteilhaft ist das Rückschlagventil durch eine Dichtmanschette zur Abdichtung des Geberzylinderkolbens gebildet.

Das dem Nehmerzylinder zugeordnete Ventil ist erfindungsgemäß zweckmäßigerweise als Kugelsitzventil ausgebildet, wobei das Ventilelement vom Druck der Hilfsdruckquelle in Schließrichtung beaufschlagt ist. Ein derartiges Ventil ist einfach in der Herstellung und gewährleistet auch bei hohen Drücken eine gute Abdichtung.

Bei einem Bremsdruckgeber, dessen Löseverhalten besonders gut ist, ist an dem durch die Betätigungsvorrichtung betätigbaren Kolben der Kolben-Zylinder-Anordnung ein zum Behälter führender Ventildurchgang vorgesehen, der durch ein an der Betätigungsvorrichtung angeordnetes zweites Ventilelement schließbar ist.

Dieser Bremsdruckgeber zeichnet sich nicht nur durch einen einfachen Aufbau, geringe Ansprechkräfte und ein gutes Ansprechverhalten aus, sondern die Anordnung des Ventildurchganges ermöglicht auch einen geringen Steuerweg zur Betätigung des Ventils bei großem Öffnungsquerschnitt.

Gemäß einer vorteilhaften Ausgestaltung dieses Bremsdruckgebers bilden der Ventildurchgang und das zweite Ventilelement ein Sitzventil, das die Betätigungsbewegung der Betätigungsvorrichtung auf den Kolben der Kolben-Zylinder-Anordnung überträgt. Die Betätigungskraft der Steuerung des ersten Ventilelements bildet auf diese Weise einen Teil der Schließkraft am zweiten Ventilelement. Ein gleichzeitiges Öffnen beider Ventilelemente ist dadurch vermieden und die vorhandenen Rückstellfedern können besonders schwach ausgelegt werden.

Vorzugsweise besteht der Kolben der Kolben-Zylinder-Anordnung aus einer Hülse, die den Verstärkerkolben durchdringt und mit ihrer gestuften Mantelfläche den Zylinderraum des Geberzylinders der Kolben-Zylinder-Anordnung begrenzt. Dabei bildet die Zentralbohrung der Hülse den Ventildurchgang, der durch das Ventilelement verschließbar ist.

Erfindungsgemäß ist weiterhin vorgesehen, daß die Hülse eine Radialbohrung aufweist, die in der Grundstellung der Hülse in den Zylinderraum mündet und bei Betätigung eine Dichtung im Verstärkerkolben überfährt, die den Zylinderraum gegen einen mit dem drucklosen Behälter in Verbindung stehenden Nachlaufraum abdichtet. Die Zentralbohrung erfüllt somit die Funktion einer Ausgleichsbohrung, wie sie bei Hauptbremszylindern üblich ist, und gewährleistet somit in der Bremslösestellung einen vollständigen Druckabbau in den Räumen der Kolben-Zylinder-Anordnung und einen Volumenausgleich bei Temperaturänderungen.

In Weiterbildung des Erfindungsgedankens ist vorgesehen, daß das zweite Ventilelement durch den Kopf eines von dem Druck in der Verstärkerkammer beaufschlagten Reaktionskolbens gebildet wird, der in einer Bohrung des Verstärkerkolbens geführt und gedichtet ist. Die gemeinsame Führung des Reaktionskolbens erleichtert die Zentrierung von Ventildurchgang und Ventilelement. Erfindungsgemäß ist weiterhin vorgesehen, daß der hydraulisch wirksame Durchmesser des Ventildurchganges gleich dem hydraulisch wirksamen Außendurchmesser des Kolbens der Kolben-Zylinder-Anordnung ist. Der Druck in der Verstärkerkammer ruft daher keine Axialkräfte an den Kolben der Kolben-Zylinder-Anordnung hervor.

Um die Drücke in der Kolben-Zylinder-Anordnung bei Betätigung des Bremsdruckgebers klein zu halten, ist gemäß einer weiteren Ausgestaltung der Erfindung vorgesehen, daß der das erste Ventilelement betätigende Kolben auf seiner dem Zylinderraum abgewandten Seite mit dem Behälterdruck beaufschlagt ist und daß er zur Betätigung des ersten Ventilelements auf einen Stößel kleineren Durchmessers einwirkt, der aus einer mit der Verstärkerkammer verbundenen Ventilkammer herausragt. Die Drücke in der Kolben-Zylinder-Anordnung bleiben somit entsprechend dem Flächenverhältnis von Stößel und Kolben kleiner als die Drücke in der Verstärkerkammer.

Die Erfindung wird nachfolgend anhand zweier Ausführungsbeispiele erläutert, die in den Zeichnungen näher dargestellt sind.

Fig. 1 zeigt einen Längsschnitt durch einen erfindungsgemäßen Bremsdruckgeber, der an eine Hilfsdruckquelle angeschlossen ist;

Fig. 2 zeigt eine Ausführungsvariante des Bremsdruckgebers nach Fig. 1.

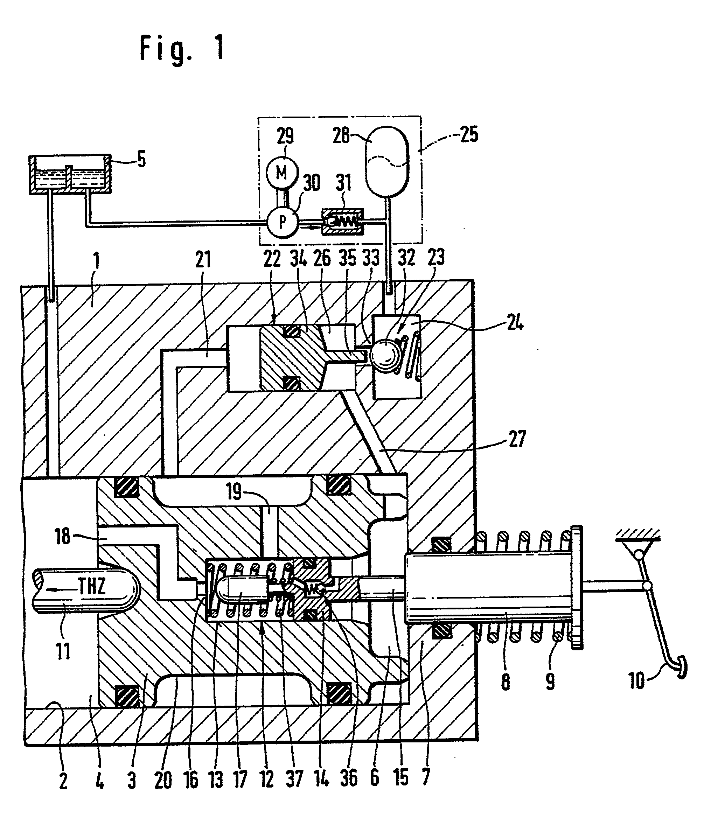

Der in Fig. 1 dargestellte Bremsdruckgeber besteht aus einem Gehäuse 1 mit einer Längsbohrung 2, in der ein Verstärkerkolben 3 verschiebbar angeordnet ist. Der Verstärkerkolben 3 unterteilt die Längsbohrung 2 in einen Nachlaufraum 4, der ständig mit einem drucklosen Behälter 5 in Verbindung steht, und in eine Verstärkerkammer 6, die an einen Gehäuseboden 7 angrenzt, durch den ein Betätigungskolben 8 hindurchgeführt ist, der entgegen der Kraft einer Rückstellfeder 9 mit Hilfe eines Bremspedals 10 in die Verstärkerkammer 6 hineinbewegbar ist.

An den Nachlaufraum 4 schließt sich ein in der Zeichnung nicht dargestellter Hauptbremszylinder an, dessen Kolben über einen Druckstößel 11 mit dem Verstärkerkolben 3 in Verbindung steht.

Zur Bildung eines Geberzylinders 12 weist der Verstärkerkolben 3 einen Zylinderraum 13 auf, die zur Verstärkerkammer 6 hin durch einen Geberzylinderkolben 14 verschlossen ist. Der Geberzylinderkolben 14 stützt sich mit einer Kolbenstange 15 am Betätigungskolben 8 ab. Im Boden des Zylinderraumes 13 ist ein Ventilsitz 16 ausgebildet, der durch ein federnd am Geberzylinderkolben 14 gehaltenes Ventilelement 17 verschließbar ist. Von dem Ventilsitz 16 führt ein Kanal 18 zum Nachlaufraum 4. Weiterhin verbindet eine Radialbohrung 19 den Zylinderraum des Geberzylinders 12 mit einer in der Mantelfläche des Verstärkerkolbens 3 ausgebildeten Ringnut 20, die über eine Druckleitung 21 mit dem Zylinderraum eines Nehmerzylinders 22 verbunden ist.

Der Nehmerzylinder 22 bildet mit einem Drucksteuerventil 23 eine bauliche Einheit. Das Drucksteuerventil 23 ist als Kugelsitzventil ausgebildet und weist eine Eingangskammer 24, die an eine Hilfsdruckquelle 25 angeschlossen ist, und eine Ausgangskammer 26 auf, die über eine Druckleitung 27 mit der Verstärkerkammer 6 verbunden ist. Die symbolartig dargestellte Hilfsdruckquelle 25 weist einen Druckspeicher 28 auf, der durch eine von einem Elektromotor 29 angetriebenen Pumpe 30 geladen wird. Von der Saugseite der Pumpe 30 führt eine Leitung zu dem drucklosen Behälter 5. Auf der Druckseite der Pumpe ist ein Rückschlagventil 31 vorgesehen, durch das ein Zurückströmen des Druckmittels verhindert wird. Das Drucksteuerventil 23 weist ein durch eine Kugel gebildetes Ventilelement 32 auf, das von dem Druck in der Eingangskammer 24 gegen einen Ventilsitz 33 gedrückt wird. Zum Öffnen des Drucksteuerventils 23 ist ein Nehmerzylinderkolben 34 vorgesehen, der den Zylinderraum des Nehmerzylinders 22 und die Ausgangskammer 26 voneinander trennt. Der Nehmerzylinderkolben 34 wirkt mit einem den Ventilsitz 33 durchgreifenden Stößel 35 auf das Ventilelement 32 ein.

Die Verstärkerkammer 6 ist mit dem Zylinderraum des Geberzylinders 12 durch ein Rückschlagventil 36 verbunden, das zum Geberzylinder 12 hin öffnet. Der Druck in der Verstärkerkammer 6 kann daher den Druck im Geberzylinder 12 nicht übersteigen.

Der beschriebene Bremsdruckgeber hat folgende Wirkungsweise:

In Fig. 1 ist der Bremsdruckgeber in der Bremslösestellung dargestellt. In dieser Stellung ist der Ventilsitz 16 offen und das Drucksteuerventil 23 geschlossen. Mit Ausnahme der Eingangskammer 24 stehen alle Räume des Bremsdruckgebers mit dem drucklosen Behälter 5 in Verbindung. Wird das Bremspedal 10 betätigt, so bewegt der Betätigungskolben 8 über die Kolbenstange 15 den Geberzylinderkolben 14 in den Geberzylinder 12 hinein, bis das Ventilelement 17 den Ventilsitz 16 verschließt. Hierbei sind nur die Kräfte der Rückstellfeder 9 und einer im Geberzylinder angeordneten Rückstellfeder 37 zu überwinden. Der Hilfsdruck hat bei Betätigungsbeginn somit keinen Einfluß auf die Betätigungskraft. Sobald der Ventilsitz 16 geschlossen ist, bewirkt bereits ein geringer Hub des Geberzylinderkolbens 14 einen Druckanstieg in den Zylinderräumen des Geberzylinders 12 und des Nehmerzylinders 22. Durch diesen Druckanstieg wird der Nehmerzylinderkolben 34 verschoben und das Ventilelement 32 vom Ventilsitz 33 abgehoben. Durch das auf diese Weise geöffnete Drucksteuerventil 23 gelangt Druckmittel aus der an die Hilfsdruckquelle 25 angeschlossenen Eingangskammer 24 in die Ausgangskammer 26 und über die Druckleitung 27 in die Verstärkerkammer 6 und ruft dort eine Druckerhöhung hervor, durch die der Verstärkerkolben 3 in Richtung auf den Nachlaufraum 4 verschoben und über den Druckstößel 11 der Hauptbremszylinder betätigt wird. Der in der Ausgangskammer 26 und in der Verstärkerkammer 6 ansteigende Druck beaufschlagt auch den Nehmerzylinderkolben 34 und den Geberzylinderkolben 14, so daß der Druck im Nehmerzylinder 22 und im Geberzylinder 12 ebenfalls um einen entsprechenden Betrag ansteigt und nach Maßgabe der am Geberzylinderkolben 14 ausgeübten Betätigungskraft über dem in die Verstärkerkammer 6 eingesteuerten Druck bleibt. Der in der Verstärkerkammer 6 ansteigende Druck beaufschlagt ebenfalls den Betätigungskolben 8 und erzeugt dadurch eine Reaktionskraft am Bremspedal 10, die der vom Verstärkerkolben 3 ausgeübten Betätigungskraft proportional ist und die dem Fahrer ein Gefühl für das Fortschreiten des Betätigungsvorgangs vermittelt.

Wird die Betätigungskraft am Bremspedal 10 nicht weiter gesteigert, so gleicht sich der Druck in den Zylinderräumen des Geberzylinders 12 und des Nehmerzylinders 22 dem Druck in der Verstärkerkammer 6 und der Ausgangskammer 26 an und das Ventilelement 32 wird von dem in der Eingangskammer 24 herrschenden Druck der Hilfsdruckquelle 25 geschlossen.

Wird die Betätigungskraft am Bremspedal 10 verringert, so wird der Betätigungskolben 8 von dem Druck in der Verstärkerkammmer 6 und der Rückstellfeder 9 in Bremslöserichtung zurückbewegt. Der Geberzylinderkolben 14 folgt dieser Bewegung unter der Wirkung der Rückstellfeder 37 und hebt dabei das Ventilelement 17 vom Ventilsitz 16 ab. Hierdurch kann der Druck im Geberzylinder 12 und im Nehmerzylinder 22 über den Kanal 18 und den Nachlaufraum 4 zum Behälter 5 abgebaut werden. Gleichzeitig wird über das sich öffnende Rückschlagventil 36 der Druck in der Verstärkerkammer 6 und in der Ausgangskammer 26 abgebaut, wobei das durch die Bremslösebewegung des Verstärkerkolbens 3 aus der Verstärkerkammer 6 verdrängte Druckmittel ebenfalls über den Kanal 18 und den Nachlaufraum 4 in den Behälter 5 gelangt.

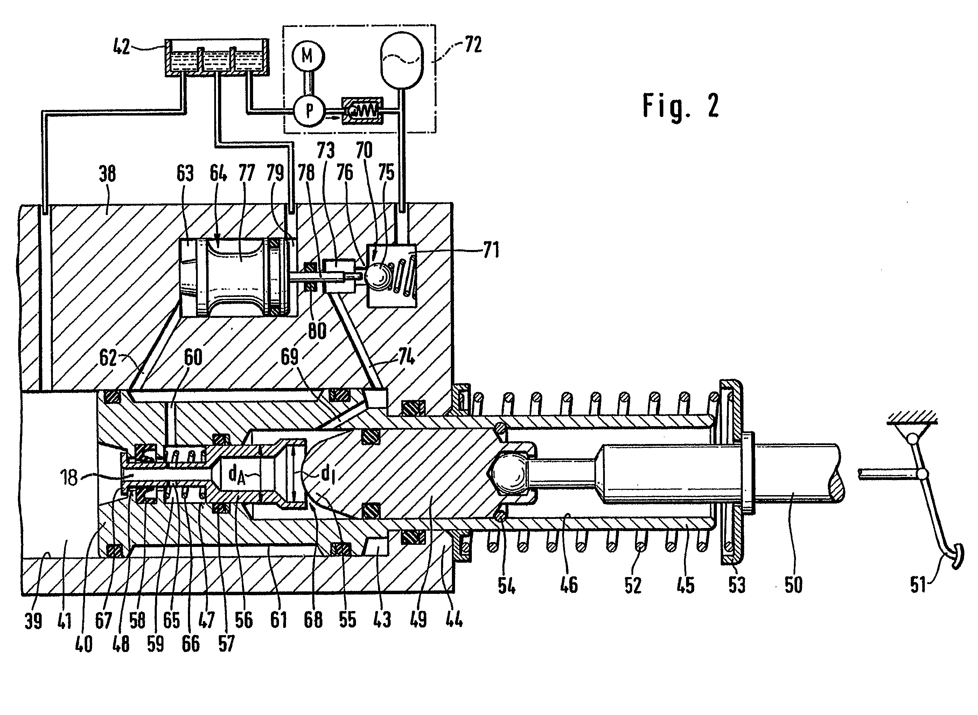

Der in Fig. 2 dargestellte Bremsdruckgeber besteht aus einem Gehäuse 38 mit einer Längsbohrung 39, in der ein Verstärkerkolben 40 verschiebbar angeordnet ist. Der Verstärkerkolben 40 unterteilt die Längsbohrung 39 in einen Nachlaufraum 41, der ständig über einen Kanal 18' mit einem drucklosen Behälter 42 in Verbindung steht, und in eine ringförmige Verstärkerkammer 43, die an einen Gehäuseboden 44 angrenzt, durch den ein hülsenförmiger Abschnitt 45 kleineren Durchmessers des Verstärkerkolbens 40 hindurchgeführt ist. Der Verstärkerkolben 40 weist eine gestufte, durchgehende Längsbohrung auf mit einem Bohrungsabschnitt 46 größeren Durchmessers, einen Geberzylinder 47 mittleren Durchmessers und einem Bohrungsabschnitt 48 kleineren Durchmessers. Im Bohrungsabschnitt 46 ist ein Reaktionskolben 49 angeordnet, der über eine Betätigungsstange 50 mit einem Bremspedal 51 verbunden ist. Eine an der Außenseite des Gehäusebodens 44 abgestützte Rückstellfeder 52 wirkt über einen Federteller 53 auf die Betätigungsstange 50 ein und zieht den Reaktionskolben 49 in Bremslöserichtung gegen einen am Verstärkerkolben 40 befestigen Anschlagring 54. Das dem Geberzylinder 47 zugewandte Ende 55 des Reaktionskolbens 49 dient als zweites, mechanisch betätigbares Ventilelement und ist mit einer kugelförmig ausgebildeten Stirnfläche versehen.

In dem Bohrungsabschnitt 48 ist ein als Hülse 56 ausgebildetes Rückschlagventil mit einer gestuften Mantelfläche axial verschiebbar geführt und mittels zweier Dichtungen 57, 58 gegenüber dem Bohrungsabschnitt 48 des Geberzylinders 47 abgedichtet. Zwischen den Gleitdichtungen 57, 58 und der Hülse 56 ist ein Zylinderraum 59 angeordnet, der als Geberzylinder 47 dient. Der Zylinderraum 59 ist über eine Radialbohrung 60 mit einer in der Mantelfläche des Verstärkerkolben 40 ausgebildeten Ringnut 61 verbunden, die über eine Druckleitung 62 an einen Zylinderraum 63 eines Nehmerzylinders 64 angeschlossen ist. Der Zylinderraum 59 ist außerdem über eine Radialbohrung 65 in der Hülse 56 mit der Hülsenbohrung verbunden, die an den Nachlaufraum 41 angeschlossen ist. Der Zylinderraum 59 enthält ferner eine Druckfeder 66, durch die die Hülse 56 mit einem Anschlagbund 67 gegen eine Anschlagfläche am Verstärkerkolben 40 gedrückt wird. Das dem Ende 55 des Reaktionskolbens 49 zugekehrte, im Durchmesser erweiterte Ende der Hülsenbohrung bildet einen durch das Ende 55 verschließbaren Ventildurchgang 68, dessen Durchmesser dl gleich dem Außendurchmesser dA der Hülse 56 ist, mit dem die Hülse 56 in den Bohrungsabschnitt 47 eingreift. Zwischen dem Bohrungsabschnitt 47 und dem Reaktionskolben 49 ist der Bohrungsabschnitt 46 durch eine Bohrung 69 mit der Verstärkerkammer 43 verbunden.

Der Nehmerzylinder 64 bildet mit einem Drucksteuerventil 70 eine bauliche Einheit. Das Drucksteuerventil 70 ist als Kugelsitzventil ausgebildet und weist eine Eingangskammer 71, die an eine Hilfsdruckquelle 72 angeschlossen ist und eine Ausgangskammer 73 auf, die über eine Druckleitung 74 mit der Verstärkerkammer 43 verbunden ist. Die symbolartig dargestellte Hilfsdruckquelle 72 besteht aus einem Druckspeicher, der durch eine von einem Elektromotor angetriebene Pumpe geladen wird. Von der Saugseite der Pumpe führt eine Leitung zu dem drucklosen Behälter 42. Auf der Druckseite der Pumpe ist ein Rückschlagventil vorgesehen, durch das ein Zurückströmen des Druckmittels verhindert wird. Das Ventilelement 75 des Drucksteuerventils 70 wird durch eine Kugel gebildet, die von dem Druck in der Ringkammer 71 gegen einen Ventilsitz 76 gedrückt wird, der in der Trennwand zwischen der Eingangskammer 71 und der Ausgangskammer 73 angeordnet ist. Zum Öffnen des Drucksteuerventils 70 ist ein Nehmerzylinderkolben 77 vorgesehen, der über einen den Ventilsitz 76 und die Ausgangskammer 73 durchgreifenden Stößel 78 auf das Ventilelement 75 einwirkt. Zwischen dem Nehmerzylinderkolben 77 und der Ausgangskammer 73 ist ein Ausgleichsraum 79 vorgesehen, der mit dem Behälter 42 in Verbindung steht und in den der Nehmerzylinderkolben 77 beim Öffnen des Drucksteuerventils 70 hineinbewegt wird. Eine mit dem Stößel 78 zusammenwirkende Dichtung 80 dichtet die Ausgangskammer 73 gegenüber dem Ausgleichsraum 79 ab. Der Bremsdruckgeber dient zur Betätigung eines in der Zeichnung nicht dargestellten Hauptbremszylinders, der sich an den Nachlaufraum 41 anschließt. Dabei wird die Betätigungskraft von dem Verstärkerkolben 40 zweckmäßig über eine Druckplatte oder einen Stößel auf den Hauptzylinderkolben übertragen.

Der Bremsdruckgeber gemäß Fig. 2 hat folgende Wirkungsweise:

Der Bremsdruckgeber ist in der Zeichnung in der Bremslösestellung dargestellt. In dieser Stellung ist der Ventildurchgang 68 offen und das Drucksteuerventil 70 geschlossen. In der Eingangskammer 71 des Drucksteuerventils 70 herrscht der Ladedruck der Hilfsdruckquelle 72. Alle übrigen Räume des Bremsdruckgebers sind an den drucklosen Behälter 42 angeschlossen.

Wird das Bremspedal 51 betätigt, so wird über die Betätigungsstange 50 der Reaktionskolben 49 in den Bohrungsabschnitt 46 hineingeschoben, bis das kugelförmige Ende 55 den Ventildurchgang 68 verschließt und dadurch die Verstärkerkammer 43 von dem Nachlaufraum 41 trennt. Bei weiterer Bewegung des Reaktionskolbens 49 in Betätigungsrichtung wird auch die nun an dem Reaktionskolben 49 abgestützte, als Rückschlagventil ausgebildete Hülse 56 verschoben, wobei die Radialbohrung 65 die Dichtung 58 überfährt. Bei diesem Vorgang sind die Rückstellkräfte der Rückstellfeder 52 und der Druckfeder 66 zu überwinden.

Sobald die Radialbohrung 65 nicht mehr mit dem Zylinderraum 59 in Verbindung steht, bewirkt bereits ein geringer Hub der Hülse 56 einen Druckanstieg in den miteinander verbundenen Zylinderräumen 59, 63. Durch diesen Druckanstieg wird der Nehmerzylinderkolben 77 verschoben und das Ventilelement 75 von dem Ventilsitz 76 abgehoben. Durch das auf diese Weise geöffnete Drucksteuerventil 70 gelangt Druckmittel aus der Eingangskammer 71 in die Ausgangskammer 73 und von dort über die Druckleitung 74 in die Verstärkerkammer 43 und ruft dort eine Druckerhöhung hervor, durch die der Verstärkerkolben 40 in Richtung auf den Nachlaufraum 41 verschoben wird, um den nicht dargestellten Hauptbremszylinder zu betätigen. Der in die Verstärkerkammer 43 eingesteuerte Druck pflanzt sich über die Bohrung 69 auch in den Bohrungsabschnitt 46 fort und beaufschlagt dort die über den Ventildurchgang 68 radial hinausragende Stirnfläche des Reaktionskolbens 49, um eine dem eingesteuerten Druck und damit auch der am Verstärkerkolben ausgeübten Betätigungskraft proportionale Reaktionskraft auf das Bremspedal 51 zu übertragen. Diese Reaktionskraft vermittelt dem Fahrer das zur Steuerung des Betätigungsvorganges erforderliche Gefühl. Der eingesteuerte Druck beaufschlagt weiterhin in der Ausgangskammer 73 den Stößel 78, wodurch auch in den Zylinderräumen 59, 63 ein Druckanstieg bewirkt wird, der aufgrund des Verhältnisses der Querschnittsflächen von Stößel 78 und Nebenzylinderkolben 77 vernachlässigbar gering ist.

Wird die Betätigungskraft am Bremspedal 51 nicht mehr weiter gesteigert, so gibt der Reaktionskolben 49 gegenüber dem durch das offene Drucksteuerventil 70 noch einströmenden Druckmittel so weit nach, bis durch das Zurückweichen der Hülse 56 so viel Druckmittel aus dem Zylinderraum 63 in den Zylinderraum 59 zurückgeflossen ist, daß das Drucksteuerventil 70 schließt. Diese Betätigungsstellung wird so lange beibehalten, bis die Betätigungskraft am Bremspedal 51 erneut geändert wird.

Wird die Betätigungskraft am Bremspedal 51 verringert, so wird der Reaktionskolben 49 von dem herrschenden Hilfsdruck sowie den Kräften der Rückstellfeder 52 und der Druckfeder 66 in Bremslösevorrichtung, d.h. aus dem Bohrungsabschnitt 46 heraus bewegt. Die Hülse 56 folgt dieser Bewegung, bis ihr Anschlagbund 67 am Verstärkerkolben 40 anliegt. Nun wird der Ventildurchgang 68 geöffnet und der in der Verstärkerkammer 43 herrschende Druck wird über die Bohrung 69, den die Hülse 56 durchdringendem Kanal 18′ und über den Nachlaufraum 41 zum Behälter 42 abgebaut, so daß der Verstärkerkolben 40 wieder in seine Ausgangslage zurückkehren kann.

Fällt bei einer Bremsbetätigung die Hilfsdruckquelle aus, so legt sich der Federteller 53 an die Stirnfläche des Abschnittes 45 des Verstärkerkolbens 40 an und ermöglicht dadurch eine Betätigung der Bremse allein mit Hilfe der am Bremspedal ausgeübten Betätigungskraft.

Bezugszeichenliste:

1 Gehäuse
2 Längsbohrung
3 Verstärkerkolben
4 Nachlaufraum
5 drehbarer Behälter
6 Verstärkerkammer
7 Gehäuseboden
8 Betätigungskolben
9 Rückstellfeder
10 Bremspedal
11 Druckstößel
12 Geberzylinder
13 Zentralbohrung

14 Geberzylinderkolben
15 Kolbenstange
16 Ventilsitz
17 Ventilelement
18 Kanal
19 Radialbohrung
20 Ringnut
21 Druckleitung
22 Nehmerzylinder
23 Drucksteuerventil
24 Eingangskammer
25 Hilfsdruckquelle
26 Ausgangskammer
27 Druckleitung
28 Druckspeicher
29 Elektromotor
30 Pumpe
31 Rückschlagventil
32 Ventilelement
33 Ventilsitz
34 Nehmerzylinderkolben
35 Stößel
36 Rückschlagventil
37 Rückstellfeder
38 Gehäuse
39 Längsbohrung
40 Verstärkerkolben
41 Nachlaufraum
42 Behälter
43 Verstärkerkammer
44 Gehäuseboden
45 Abschnitt
46 Bohrungsabschnitt
47 Geberzylinder
48 Bohrungsabschnitt
49 Reaktionskolben
50 Betätigungsstange
51 Bremspedal
52 Rückstellfeder
53 Federteller
54 Anschlagring
55 Ende von 12, zweites Ventilelement
56 Hülse, Rückschlagventil
57 Dichtung
58 Dichtung
59 Zylinderraum
60 Radialbohrung
61 Ringnut
62 Druckleitung
63 Zylinderraum
64 Nehmerzylinder
65 Radialbohrung
66 Druckfeder
67 Anschlagbund
68 Ventildurchgang
69 Bohrung
70 Drucksteuerventil, Ventilvorrichtung
71 Eingangskammer
72 Hilfsdruckquelle
73 Ausgangskammer
74 Druckleitung
75 Ventilelement, erstes Ventilelement
76 Ventilsitz
77 Nehmerzylinderkolben
78 Stößel

79 Ausgleichsraum
80 Dichtung

**Patentansprüche**

1. Bremsdruckgeber für eine hydraulische Kraftfahrzeugbremsanlage mit einem durch einen hydraulischen Hilfsdruck in einer Verstärkerkammer (43) beaufschlagbaren Verstärkerkolben (40) zur Betätigung eines Hauptbremszylinders, einer mit dem Verstärkerkolben (40) zusammenwirkenden Betätigungsvorrichtung (49, 50, 51) und einer durch eine Relativbewegung zwischen dem Verstärkerkolben (40) und der Betätigungsvorrichtung (49, 50, 51) betätigbaren Ventilvorrichtung (58, 65, 70) zur Steuerung des Hilfsdruckes, wobei zur Betätigung der Ventilvorrichtung (58, 65, 70) eine hydraulische Kolben-Zylinder-Anordnung (47, 56, 63, 64) vorgesehen ist, die im Kraftweg zwischen der Betätigungsvorrichtung (49, 50, 51) und dem Verstärkerkolben (40) liegt, sowie ein erstes Ventilelement (75) aufweisende Ventilvorrichtung (58, 65, 70), wobei das Ventilelement (75) durch die Kolben-Zylinder-Anordnung (47, 56, 63, 64) hydraulisch betätigbar ist und die Verstärkerkammer (43) mit einer Hilfsdruckquelle (72) verbindet, und mit einem durch die Betätigungsvorrichtung (49, 50, 51) mechanisch betätigbaren, zweiten Ventilelement (55), dadurch gekennzeichnet, daß über das zweite Ventilelement (17, 55) die Verstärkerkammer (6, 43) über einen verschließbaren Kanal (18, 18') unmittelbar mit einem drucklosen Behälter (5, 42) verbindbar ist und daß die Verstärkerkammer (6, 43) mit dem Zylinderraum des Geberzylinders (12, 47) über ein in den Zylinderraum (13, 59) öffnendes Rückschlagventil (36, 56) verbindbar ist.

2. Bremsdruckgeber nach Anspruch 1, dadurch gekennzeichnet, daß die Kolben-Zylinder-Anordnung einen im Verstärkerkolben (3) angeordneten Geberzylinder (12), dessen Kolben (14) mit der Betätigungsvorrichtung (8) verbunden ist, und einen an den Geberzylinder (12) angeschlossenen Nehmerzylinder (22) aufweist, dessen Kolben (34) in Öffnungsrichtung auf ein Ventilelement (32) der Ventilvorrichtung (23) einwirkt.

3. Bremsdruckgeber nach Anspruch 2, dadurch gekennzeichnet, daß die Kolben (14, 34) des Geber- (12) und des Nehmerzylinders (22) auf ihren den Zylinderräumen abgekehrten Seiten mit dem Hilfsdruck beaufschlagbar sind.

4. Bremsdruckgeber nach einem der Ansprüche 2 oder 3, dadurch gekennzeichnet, daß der Zylinderraum des Geberzylinders (12) über ein in der Grundstellung offenes und bei Betätigung durch die Betätigungsvorrichtung (8) schließbares Ventil (16, 17) an einen drucklosen Behälter (5) anschließbar ist.

5. Bremsdruckgeber nach Anspruch 1, dadurch gekennzeichnet, daß das Rückschlagventil (36) durch eine Dichtmanschette zur Abdichtung des Geberzylinderkolbens (14) gebildet ist.

6. Bremsdruckgeber nach einem der vorhergehenden Ansprüche, dadurch gekennzeichnet, daß das dem Nehmerzylinder (22) zugeordnete Ventil (23) ein Kugelsitzventil ist, dessen Ventilelement (32) vom Druck der Hilfsdruckquelle (25) in Schließrichtung beaufschlagt ist.

7. Bremsdruckgeber für eine hydraulische Kraftfahrzeugbremsanlage mit einem durch einen hydraulischen Hilfsdruck in einer Verstärkerkammer (43) beaufschlagbaren Verstärkerkolben (40) zur Betätigung eines Hauptbremszylinders, einer mit dem Verstärkerkolben (40) zusammenwirkenden Betätigungsvorrichtung (49, 50, 51) und einer durch eine Relativbewegung zwischen dem Verstärkerkolben (40) und der Betätigungsvorrichtung (49, 50, 51) betätigbaren Ventilvorrichtung (58, 65, 70) zur Steuerung des Hilfsdruckes, wobei zur Betätigung der Ventilvorrichtung (58, 65, 70) eine hydraulische Kolben-Zylinder-Anordnung (47, 56, 63, 64) vorgesehen ist, die im Kraftweg zwischen der Betätigungsvorrichtung (49, 50, 51) und dem Verstärkerkolben (40) liegt, sowie ein erstes Ventilelement (75) aufweisende Ventilvorrichtung (58, 65, 70), wobei das Ventilelement (75) durch die Kolben-Zylinder-Anordnung (47, 56, 63, 64) hydraulisch betätigbar ist und die Verstärkerkammer (43) mit einer Hilfsdruckquelle (72) verbindet, und mit einem durch die Betätigungsvorrichtung (49, 50, 51) mechanisch betätigbaren zweiten Ventilelement (55), dadurch gekennzeichnet, daß an dem durch die Betätigungsvorrichtung (49, 50, 51) betätigbares Rückschlagventil (56) der Kolben-Zylinder-Anordnung ein zum Behälter (42) führender Ventildurchgang (68) vorgesehen ist, der durch das an der Betätigungsvorrichtung angeordnete zweite Ventilelement (55) schließbar ist.

8. Bremsdruckgeber nach Anspruch 7, dadurch gekennzeichnet, daß der Ventildurchgang (68) und das zweite Ventilelement (55) ein Sitzventil bilden, das die Betätigungsbewegung der Betätigungsvorrichtung (49, 50, 51) auf das Rückschlagventil (56) der Kolben-Zylinder-Anordnung überträgt.

9. Bremsdruckgeber nach Anspruch 7 oder 8, dadurch gekennzeichnet, daß das Rückschlagventil der Kolben-Zylinder-Anordnung aus einer Hülse (56) besteht, die den Verstärkerkolben (40) durchdringt und mit ihrer gestuften Mantelfläche einen Zylinderraum (59) begrenzt.

10. Bremsdruckgeber nach Anspruch 9, dadurch gekennzeichnet, daß die Hülse (56) eine Radialbohrung (65) hat, die in der Grundstellung der Hülse (56) in den Zylinderraum (59) mündet und bei Betätigung eine Dichtung (58) im Verstärkerkolben (40) überfährt, die den Zylinderraum (59) gegen einen mit dem drucklosen Behälter (42) in Verbindung stehenden Nachlaufraum (41) abdichtet.

11. Bremsdruckgeber nach einem der Ansprüche 7 bis 10, dadurch gekennzeichnet, daß das zweite Ventilelement durch den Kopf (55) eines vom Druck in der Verstärkerkammer (43) beaufschlagten Reaktionskolbens (49) gebildet ist, der in einer Bohrung (46) des Verstärkerkolbens (40) geführt und gedichtet ist.

12. Bremsdruckgeber nach einem der Ansprüche 7 bis 11, dadurch gekennzeichnet, daß der hydrau-lisch wirksame Durchmesser (dI) des Ventildurch-ganges (68) gleich dem hydraulisch wirksamen Außendurchmesser (dA) des Rückschlagventiles (56) der Kolben-Zylinder-Anordnung ist.

13. Bremsdruckgeber nach einem der Ansprüche 7 bis 12, dadurch gekennzeichnet, daß der das erste Ventilelement (75) betätigende Kolben (77) auf seiner dem Zylinderraum (63) abgewandten Seite mit dem Behälterdruck beaufschlagt ist und auf einen Stößel (78) kleineren Durchmessers einwirkt, der aus einer mit der Verstärkerkammer (43) verbundenen Ventilkammer (73) herausragt.

## Claims

1. A braking pressure generator for a hydraulic brake system for automotive vehicles comprising a booster piston (40) to which a hydraulic auxiliary pressure in a booster chamber (43) is applicable in order to actuate a brake master cylinder, comprising an actuating device (49, 50, 51) cooperating with the booster piston (40) as well as a valve assembly (58, 65, 70) actuatable by a relative movement between the booster piston (40) and the actuating device (49, 50, 51) and serving to control the auxiliary pressure, wherein for the actuation of the valve assembly (58, 65, 70) a hydraulic piston-and-cylinder assembly (47, 56, 63, 64) is provided which is interposed in the power track between the actuating device (49, 50, 51) and the booster piston (40), and there being provision of a valve assembly (58, 65, 70) comprising a first valve element (75), the said valve element (75) being hydraulically actuatable by the piston-and-cylinder assembly (47, 56, 63, 64) and providing communication between the booster chamber (43) and an auxiliary pressure source (72), as well as a second valve element (55) mechanically actuatable by the actuating device (49, 50, 51), characterized in that, via the second valve element (17, 55), the booster chamber (6, 43) is connectible through a closable channel (18, 18') directly with an unpressurized reservoir (5, 42), and in that the booster chamber (6, 43) is connectible to the cylinder chamber of the master cylinder (12, 47) via a non-return valve (36, 56) opening into the cylinder chamber (13, 59).

2. A braking pressure generator as claimed in claim 1, characterized in that the piston-and-cylinder assembly is composed of a master cylinder (12) incorporated in the booster piston (3) and having its piston (14) connected to the actuating device (8), as well as a slave cylinder (22) connected to the master cylinder (12) and having its piston (34) act in the opening direction upon a valve element (32) of the valve assembly (23).

3. A braking pressure generator as claimed in claim 2, characterized in that the pistons (14, 34) of the master cylinder (12) and the slave cylinder (22) can be applied by the auxiliary pressure on their sides averted from the cylinder chambers.

4. A braking pressure generator as claimed in any one of the claims 2 or 3, characterized in that the cylinder chamber of the master cylinder (12) is connectible to an unpressurized reservoir (5) through a valve (16, 17) which is open in its initial position and which, on actuation, is closable by the actuating device (8).

5. A braking pressure generator as claimed in claim 1, characterized in that the non-return valve (36) is formed by a sealing cup for sealing the master cylinder piston (14).

6. A braking pressure generator as claimed in any one of the preceding claims, characterized in that the valve (23) allocated to the slave cylinder (22) is a spherical seat valve, the valve element (32) thereof being applied by the pressure of the auxiliary pressure source (25) in the closing direction.

7. A braking pressure generator for a hydraulic brake system for automotive vehicles comprising a booster piston (40) to which a hydraulic auxiliary pressure in a booster chamber (43) is applicable in order to actuate a brake master cylinder, comprising an actuating device (49, 50, 51) cooperating with the booster piston (40) as well as a valve assembly (58, 65, 70) actuatable by a relative movement between the booster piston (40) and the actuating device (49, 50, 51) and serving to control the auxiliary pressure, wherein for the actuation of the valve assembly (58, 65, 70) a hydraulic piston-and-cylinder assembly (47, 56, 63, 64) is provided which is interposed in the power track between the actuating device (49, 50, 51) and the booster piston (40), and there being provision of a valve assembly (58, 65, 70) comprising a first valve element (75), the said valve element (75) being hydraulically actuatable by the piston-and-cylinder assembly (47, 56, 63, 64) and providing communication between the booster chamber (43) and an auxiliary pressure source (72), as well as a second valve element (55) mechanically actuatable by the actuating device (49, 50, 51), characterized in that a valve passage (68) leading to the reservoir (42) is provided at the non-return valve (56) of the piston-and-cylinder assembly actuatable by the actuating device (49, 50, 51), the said valve passage being closable by the second valve element (55) arranged at the actuating device.

8. A braking pressure generator as claimed in claim 7, characterized in that the valve passage (68) and the second valve element (55) form a seat valve which transmits the actuating movement of the actuating device (49, 50, 51) onto the non-return valve (56) of the piston-and-cylinder assembly.

9. A braking pressure generator as claimed in claim 7 or 8, characterized in that the non-return valve of the piston-and-cylinder assembly is composed of a sleeve (56) which penetrates the booster piston (40) and which confines with its stepped peripheral surface a cylinder chamber (59).

10. A braking pressure generator as claimed in claim 9, characterized in that the sleeve (56) contains a radial bore (65) which terminates into the cylinder chamber (59) in the initial position of the sleeve (56) and, on actuation thereof, overrides a seal (58) in the booster piston (40) which seals the cylinder chamber (59) towards a supply chamber (41) communicating with the unpressurized reservoir (42).

11. A braking pressure generator as claimed in any one of the claims 7 to 10, characterized in that the second valve element is formed by the head (55) of a reaction piston (49) which is acted upon by the pressure in the booster chamber (43) and which is guided and sealed in a bore (46) of the booster piston (40).

12. A braking pressure generator as claimed in any one of the claims 7 to 11, characterized in that the hydraulically effective diameter (dI) of the valve passage (68) is equal to the hydraulically effective external diameter (dA) of the non-return valve (56) of the piston-and-cylinder assembly.

13. A braking pressure generator as claimed in any one of the claims 7 to 12, characterized in that the piston (77) actuating the first valve element (75) is exposed to the reservoir pressure on its side remote from the cylinder chamber (63) and acts upon a smaller-diameter tappet (78) which projects from a valve chamber (73) connected to the booster chamber (43).

## Revendications

1. Générateur de pression de freinage pour système hydraulique de freinage de véhicule automobile, comportant un piston d'amplification (40), servant à actionner un maître-cylindre, qui est soumis à l'action d'une pression hydraulique auxiliaire régnant dans une chambre d'amplification (43), un dispositif d'actionnement (49, 50, 51) coopérant avec ce piston d'amplification (40), un dispositif de valve (68–55, 70), servant à mettre en œuvre la pression auxiliaire, qui peut être actionné par un déplacement relatif entre le piston d'amplification (40) et le dispositif d'actionnement (49, 50, 51), tandis qu'il est prévu, pour l'actionnement de ce dispositif de valve (68–55, 70), un ensemble hydraulique à pistons et cylindres (47, 56, 63, 64) qui se trouve sur le trajet de transmission de force entre le dispositif d'actionnement (49, 50, 51) et le piston d'amplification (40), le dispositif de valve (68–55, 70) comprenant un premier élément de valve (75), cet élément de valve (75) pouvant être actionné hydrauliquement par l'ensemble à pistons et cylindres (47, 56, 63, 64) et faisant communiquer la chambre d'amplification (43) avec une source de pression auxiliaire (72), et un second élément de valve (55) pouvant être actionné mécaniquement par le dispositif d'actionnement (49, 50, 51), caractérisé en ce que, par l'intermédiaire du second élément de valve (17, 55), la chambre d'amplification (6, 43) est mise directement en communication avec un réservoir (5, 42), qui n'est pas sous pression, en passant par un passage obturable (18, 18') et en ce que la chambre d'amplification (6, 43) peut être mise en communication avec la chambre du cylindre émetteur (12, 47) par l'intermédiaire d'une valve antiretour (36, 56) s'ouvrant en direction de la chambre de cylindre (13, 59).

2. Générateur de pression de freinage suivant la revendication 1, caractérisé en ce que le dispositif à pistons et cylindres comprend un cylindre émetteur (12), disposé dans le piston d'amplification (3) et dont le piston (14) est relié au dispositif d'actionnement (8), et un cylindre récepteur (22) communiquant avec le cylindre émetteur (12) et dont le piston (34) agit, dans le sens de l'ouverture, sur un élément de valve (32) du dispositif de valve (23).

3. Générateur de pression de freinage suivant la revendication 2, caractérisé en ce que, sur leurs faces situées à l'opposé des chambres de cylindre, les pistons (14, 34) du cylindre émetteur (12) et du cylindre récepteur (22) peuvent être soumises à l'action de la pression auxiliaire.

4. Générateur de pression de freinage suivant l'une des revendications 2 et 3, caractérisé en ce que la chambre du cylindre émetteur (12) peut être raccordée à un réservoir (5), qui n'est pas sous pression, par une valve (16, 17) qui est ouverte dans la position de repos et peut se fermer lors d'un actionnement à l'aide du dispositif d'actionnement (8).

5. Générateur de pression de freinage suivant la revendication 1, caractérisé en ce que la valve antiretour (36) est constituée par une coupelle d'étanchéité assurant l'étanchéité du piston (14) du cylindre émetteur.

6. Générateur de pression de freinage suivant l'une quelconque des revendications précédentes, caractérisé en ce que la valve (23) associée au cylindre récepteur (22) est constituée par une valve à bille dont l'élément de valve (32) est repoussé dans le sens de la fermeture par la pression de la source de pression auxiliaire (25).

7. Générateur de pression de freinage pour système hydraulique de freinage de véhicule automobile, comportant un piston d'amplification (40), servant à actionner un maître-cylindre, qui est soumis à l'action d'une pression hydraulique auxiliaire régnant dans une chambre d'amplification (43), un dispositif d'actionnement (49, 50, 51) coopérant avec ce piston d'amplification (40), un dispositif de valve (68–55, 70), servant à mettre en œuvre la pression auxiliaire, qui peut être actionné par un déplacement relatif entre le piston d'amplification (40) et le dispositif d'actionnement (49, 50, 51), tandis qu'il est prévu, pour l'actionnement de ce dispositif de valve (68–55, 70), un ensemble hydraulique à pistons et cylindres (47, 56, 63, 64) qui se trouve sur le trajet de transmission de force entre le dispositif d'actionnement (49, 50, 51) et le piston d'amplification (40), le dispositif de valve (68–55, 70) comprenant un premier élément de valve (75), cet élément de valve (75) pouvant être actionné hydrauliquement par l'ensemble à pistons et cylindres (47, 56, 63, 64) et faisant communiquer la chambre d'amplification (43) avec une source de pression auxiliaire (72), et un second élément de valve (55) pouvant être actionné mécaniquement par le dispositif d'actionnement (49, 50, 51), caractérisé en ce qu'il est prévu, sur la valve antiretour (56) de l'ensemble à pistons et cylindres, valve antiretour qui peut être actionnée à l'aide du dispositif d'actionnement (49, 50, 51), un orifice de valve (68) conduisant à un réservoir (42) et qui peut être fermé par le second élément de valve (55) disposé sur le dispositif d'actionnement.

8. Générateur de pression de freinage suivant la revendication 7, caractérisé en ce que l'orifice de valve (68) et le second élément de valve (55) constituent une valve à siège qui transmet le déplacement d'actionnement du dispositif d'actionnement (49, 50, 51) à la valve antiretour (56) de l'ensemble à pistons et cylindres.

9. Générateur de pression de freinage suivant la revendication 7 ou 8, caractérisé en ce que la valve antiretour de l'ensemble à pistons et cylindres est constitué d'un manchon (56) qui traverse le piston d'amplification (40) et délimite par sa surface périphérique étagée une chambre de cylindre (59).

10. Générateur de pression de freinage suivant la revendication 9, caractérisé en ce que le manchon (56) offre un perçage radial (65) qui, dans la position de repos du manchon (56), débouche dans la chambre de cylindre (59) et, lors d'un actionnement, passe devant une garniture d'étanchéité (58), située dans le piston d'amplification (40), qui assure l'étanchéité de la chambre de cylindre (59) vis-à-vis d'une chambre de compensation (41) communiquant avec le réservoir (42) qui n'est pas sous pression.

11. Générateur de pression de freinage suivant l'une quelconque des revendications 7 à 10, caractérisé en ce que le second élément de valve est constitué par la tête (55) d'un piston de réaction (49) qui est soumis à la pression régnant dans la chambre d'amplification (43) et qui est guidé, d'une manière étanche, dans un alésage (46) du piston d'amplification (40).

12. Générateur de pression de freinage suivant l'une quelconque des revendications 7 à 11, caractérisé en ce que le diamètre hydrauliquement actif (dl) de l'orifice de valve (68) est égal au diamètre extérieur hydrauliquement actif (dA) de la valve antiretour (56) de l'ensemble à pistons et cylindres.

13. Générateur de pression de freinage suivant l'une quelconque des revendications 7 à 12, caractérisé en ce que, sur sa face située à l'opposé de la chambre de cylindre (63), le piston (77) actionnant le premier élément de valve (75) est soumis à l'action de la pression du réservoir et agit sur une tige-poussoir (78) de plus petit diamètre qui fait saillie hors d'une chambre de valve (73) communiquant avec la chambre d'amplification (43).

EP 0 239 754 B1

Fig. 1

Fig. 2

EP 0 239 754 B1

$d_A$   $d_l$